# DEMANDE DE BREVET EUROPEEN

(11) **EP 1 270 297 A1**
(43) Date de publication de la demande: **02.01.2003**
(21) Numéro de dépôt: 02291624.1
(22) Date de dépôt: 28.06.2002
(51) Int. Cl.: B60J 5/14, B60J 5/08, E06B 9/15

(54) **Dispositif d'ouvrant coulissant à lamelles à double charnière film, à pas variable et enrouler intégré.**

(30) Priorité: 29.06.2001 FR 0108664
(71) Demandeur: Peugeot Citroen Automobiles SA, 92200 Neuilly sur Seine (FR)
(72) Inventeur: Bertrand Belanger, Pascal, 92310 Sevres (FR)
(74) Mandataire: Thinat, Michel

(57) **Abrégé**

Dispositif d'ouvrant coulissant à lamelles.

Le dispositif comprend un cylindre d'enroulement (1) relié à une série de lamelles (2) déplaçables entre deux rails latéraux de guidage (4) et est caractérisé en ce que le cylindre d'enroulement (1) est intégré aux lamelles (2) qui sont elles-mêmes intégrées les unes aux autres (2a-2h) en étant séparées par une double charnière film (3) et en présentant un pas variable sur au moins une partie de la périphérie du cylindre d'enroulement lorsque les lamelles sont enroulées.

L'invention s'applique aux ouvrants de véhicules automobiles.

## Description

La présente invention concerne un dispositif d'ouvrant coulissant à lamelles à double charnière film, à pas variable et enrouleur intégré.

Dans les véhicules à hayon arrière, les attentes des consommateurs tournent autour de la modularité et de la transformation arrière des véhicules automobiles afin d'en faciliter le chargement.

Une solution consiste à remplacer les dispositifs d'ouvrant traditionnel en tôle constituant la porte arrière du véhicule par des dispositifs d'ouvrant dit "ouvrants à lamelle". Cette solution permet d'utiliser des volets à cylindre d'enroulement pour ranger les lamelles et ainsi passer de la position "fermé" à la position "ouvert". L'avantage de cette solution est de permettre de très grandes ouvertures ne présentant de débattement ni à l'extérieur, ni à l'intérieur. Les systèmes actuels de ce type utilisent des dispositions déjà employées dans le bâtiment et simplement transposées dans l'automobile. Ces systèmes posent de nombreux problèmes, principalement au niveau de l'étanchéité et du stockage, une fois les lamelles enroulées.

La présente invention permet d'utiliser la technologie des volets roulants en réduisant les problèmes d'étanchéité ainsi que les dimensions du rangement nécessaires au stockage.

Conformément à la présente invention, le dispositif d'ouvrant coulissant à lamelles comprenant un cylindre d'enroulement relié à une série de lamelles déplaçables entre deux rails latéraux de guidage, est caractérisé en ce que le cylindre d'enroulement est intégré aux lamelles qui sont elles-mêmes intégrées les unes aux autres, les lamelles étant séparées les unes des autres par une double charnière film et les lamelles sélectivement enroulées sur au moins une partie de la périphérie du cylindre d'enroulement présentant un pas variable.

Selon d'autres caractéristiques de l'invention:
- au moins celles des lamelles à pas variable à proximité du cylindre d'enroulement présentent une épaisseur variable;
- un joint d'étanchéité est prévu entre l'extrémité des lamelles et les rails latéraux de guidage;
- pour un diamètre du cylindre d'enroulement compris entre 25 et 80 mm, l'épaisseur des lamelles est comprise entre 10 et 25 mm et tandis que le pas ou la largeur des lamelles est compris entre 5 et 10 mm pour la première lamelle à proximité du cylindre d'enroulement et entre 10 et 70 mm pour les autres, et l'angle du biseau du sillon entre deux lamelles étant compris entre 10 et 45°;
- pour un diamètre du cylindre d'enroulement compris entre 25 et 80 mm , l'épaisseur des premières lamelles à proximité du cylindre d'enroulement est compris entre 5 et 15 mm;
- le cylindre d'enroulement est motorisé;
- le cylindre d'enroulement est actionné à manivelle;
- l'ensemble des lamelles et du cylindre d'enroulement intégré est réalisé en résine avec ajout de fibres orientées.

L'invention s'étend également à un procédé de réalisation du dispositif d'ouvrant à lamelle selon les caractéristiques précédentes et qui consiste à mouler la série de lamelles avec le cylindre d'enroulement à l'aide d'un demi-moule supérieur et d'un demi-moule inférieur, de sorte qu'il est possible de donner, pour un diamètre déterminé du cylindre d'enroulement, des valeurs différentes aux différents paramètres caractéristiques des lamelles telle que: l'épaisseur de la lamelle, le pas ou largeur de la lamelle, l'angle du biseau entre deux lamelles ainsi que l'inter-distance entre deux doubles charnières film dans un même sillon, et cela sans augmenter les coûts de fabrication.

Dans le présent mémoire descriptif, le terme "intégré" signifie venant de matière avec, de sorte que les diverses lamelles viennent de matière avec le cylindre d'enroulement.

L'invention sera mieux comprise, et d'autres buts, caractéristiques, détails et avantages de celle-ci apparaîtront plus clairement de la description explicative qui va suivre faite en référence aux dessins schématiques annexés donnés uniquement à titre d'exemple illustrant un mode de réalisation de l'invention et dans lesquels:
- la figure 1 est une vue schématique du dispositif d'ouvrant à lamelles selon l'invention;
- la figure 2 est une variante de la figure 1;
- la figure 3 est une vue explicative de l'invention; et
- la figure 4 est une vue schématique en coupe d'un moule illustrant un procédé de fabrication de l'ensemble des lamelles et du cylindre d'enroulement intégré.

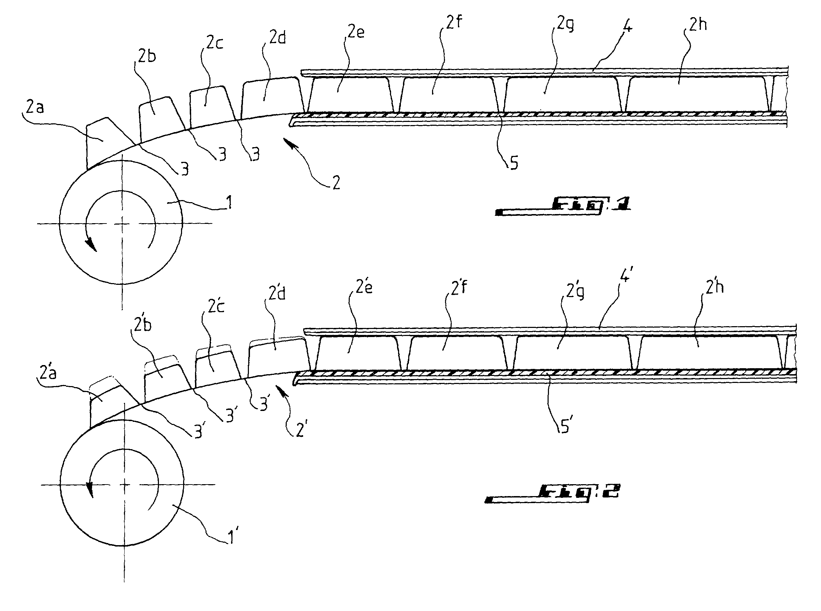

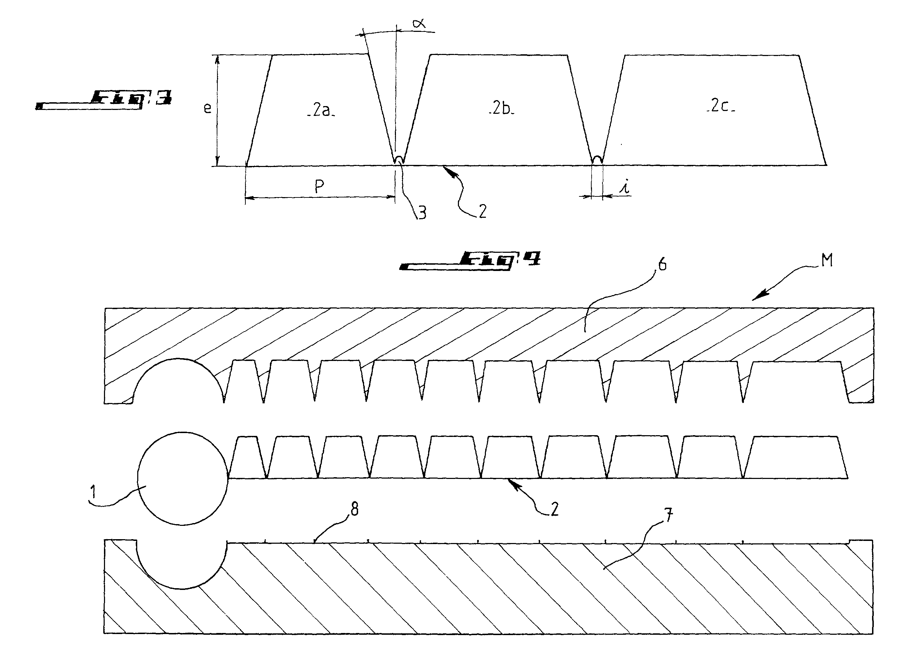

A la figure 1 on a représenté de manière schématique en 1 un cylindre d'enroulement du dispositif d'ouvrant selon l'invention. Au cylindre d'enroulement 1 est intégré une série de lamelles 2, référencées 2a, 2b...2h..., qui viennent elles-mêmes de matière ou sont intégrées les unes aux autres en présentant entre elles une charnière de type double charnière film 3 dans un même sillon entre deux lamelles comme cela est expliqué plus loin en liaison avec la figure 3.

Les diverses lamelles 2 sont guidées par deux rails latéraux de guidage 4 et un joint d'étanchéité 5 est prévu dans au moins un des rails 4 pour assurer une étanchéité entre l'extrémité des diverses lamelles 2 et les rails 4.

Il ressort de ce qui précède que les diverses lamelles 2 peuvent coulisser à l'intérieur des rails de guidage 4 et s'enrouler autour du cylindre d'enroulement 1 qui est de type motorisé ou actionné à la manivelle.

Conformément à l'invention, et comme on le voit aux dessins, les diverses lamelles 2a à 2h de la figure 1, c'est-à-dire celles situées le plus près du cylindre d'enroulement 1, présentent un pas p ou une largeur (voir figure 3) de plus en plus grande au fur et à mesure que l'on s'éloigne du cylindre d'enroulement 1. Cette variation de pas est prévue pour optimiser l'enroulement des lamelles 2 sur le cylindre d'enroulement 1 en réduisant le diamètre d'attaque des lamelles sur le cylindre. A ce sujet, les lamelles 2 non représentées et qui suivent la lamelle 2h de la figure 1 peuvent au choix présenter un pas constant ou un pas croissant. L'important étant que le pas des lamelles 2 soit variable sur au moins une partie de la périphérie du cylindre d'enroulement 1 lorsque les lamelles sont enroulées.

A la figure 2, on a représenté une variante de la disposition selon la figure 1 où l'épaisseur des premières lamelles 2'a à 2'd à proximité du cylindre d'enroulement 1' va en augmentant à partir du cylindre d'enroulement.

Une telle disposition permet de réduire le diamètre d'attaque sur le cylindre d'enroulement encore davantage que la disposition selon la figure 1 où l'épaisseur des lamelles est constante.

Bien que cela ne soit pas représenté au dessin, il est évident que l'augmentation progressive de hauteur des lamelles n'est pas limitée aux quatre première lamelles comme représenté à la figure 2 mais peut s'étendre sur d'autres lamelles qui suivent la lamelle 2'd.

On a représenté à plus grande échelle à la figure 3 une partie des lamelles à pas progressif 2 de la figure 1, par exemple les lamelles 2a, 2b et 2c.

De manière à définir les paramètres généraux des lamelles, sans que ces valeurs soient limitatives et pour un cylindre d'enroulement 1 de diamètre déterminé compris entre 25 et 80 mm , le pas ou largeur p de la lamelle 2a le plus près du cylindre d'enroulement 1 peut être compris entre 5 et 10 mm , tandis que le pas variable p des autres lamelles peut être compris entre 10 et 70 mm. Pour un même diamètre du cylindre d'enroulement 1, l'épaisseur des lamelles 1 peut être compris entre 10 et 25 mm, tandis que l'angle α du biseau défini entre deux lamelles déterminées peut être compris entre 15 et 45°.

On a indiqué par i l'inter-distance entre deux parties de la double charnière film 3 de la figure 3 dans un même sillon entre deux lamelles.

Du fait du matériau des lamelles 2, qui sont de préférence réalisées en une résine avec ajout de fibres orientées, la très faible épaisseur locale de la charnière 3 de type double charnière film permet de faire tourner les diverses lamelles autour d'un axe virtuel par déformation du matériau et d'enrouler convenablement les lamelles 2 sur le cylindre d'enroulement 1.

En ce qui concerne la réalisation selon la figure 2, pour une série de lamelles dont les lamelles qui suivent la lamelle 2'd présentent une épaisseur constante comme indiqué ci-dessus, l'épaisseur des premières lamelles peut être compris entre 5 et 15 mm.

On voit d'après ce qui précède qu'en utilisant des lamelles à pas variable, de largeur allant en augmentant à partir du cylindre d'enroulement au moins pour les premières lamelles, il est possible d'optimiser parfaitement l'enroulement en réduisant le diamètre d'attaque sur le cylindre d'enroulement.

En ce qui concerne les divers paramètres caractérisant les lamelles et, pour un pas p déterminé, l'augmentation de i et de α et la diminution de e, au moins pour les lamelles situées à proximité du cylindre d'enroulement, permet de réduire de façon significative le diamètre d'attaque et, par conséquent, le diamètre total d'encombrement des lamelles enroulées. En outre, la technologie des lamelles articulées autour de charnières de type double charnière film selon l'invention permet de résoudre tous les problèmes d'étanchéité entre les lamelles.

La figure 4 illustre de manière schématique le procédé de fabrication de l'ensemble cylindre d'enroulement 1 et lamelles 2 dans un moule. Le moule, référencé en son ensemble par M, comprend un demi-moule supérieur 6 et un demi-moule inférieur 7, permettant de mouler entre eux une série de lamelles 2 intégrées au cylindre d'enroulement 1. De manière à former les doubles charnières film 3, le demi-moule inférieur 7 comporte une série de saillies 8 à pas variable correspondant au pas variable des lamelles 2 ou 2'.

Du fait qu'il existe seulement un moule pour réaliser les séries de lamelles, il peut être envisagé de donner des valeurs différentes aux différents paramètres indiqués ci-dessus et caractérisant une lamelle, et cela de manière simple et sans augmenter les coûts de fabrication.

Parmi les avantages du dispositif d'ouvrant conforme à l'invention on peut donc noter:
- une réduction du diamètre d'attaque du cylindre d'enroulement et donc une réduction du diamètre de stockage;
- une simplicité du mécanisme du fait notamment de la double charnière film;
- une suppression de la fixation entre la première lamelle et le cylindre d'enroulement;
- un moule unique pour réaliser la série de lamelles;
- la possibilité de modifier facilement les paramètres des diverses lamelles et de donner, sans surcoût, des dimensions différentes aux diverses lamelles.

## Revendications

1. Dispositif d'ouvrant coulissant à lamelles comprenant un cylindre d'enroulement (1, 1') relié à une série de lamelles (2, 2') déplaçables entre deux rails latéraux de guidage (4, 4'), **caractérisé en ce que** le cylindre d'enroulement (1, 1') est intégré aux lamelles (2, 2') qui sont elles-mêmes intégrées les unes aux autres (2a-2h...; 2'a-2'h...) les lamelles étant séparées les unes des autres par une double charnière film (3, 3') et les lamelles sélectivement enroulées sur au moins partie de la périphérie du cylindre d'enroulement présentant un pas (p) variable qui augmente en s'éloignant du cylindre d'enroulement.

2. Dispositif d'ouvrant selon la revendication 1, **caractérisé en ce qu'**au moins celles des lamelles à pas variable (2') à proximité du cylindre d'enroulement (1') présentent une épaisseur (e) variable.

3. Dispositif d'ouvrant selon l'une des revendications 1 ou 2, **caractérisé en ce qu'**un joint d'étanchéité (5; 5') est prévu entre l'extrémité des lamelles (2; 2') et les rails latéraux de guidage (4; 4').

4. Dispositif d'ouvrant selon l'une des revendications 1 à 3, **caractérisé en ce que**, pour un diamètre du cylindre d'enroulement compris entre 25 et 80 mm, l'épaisseur (e) des lamelles est comprise entre 10 et 25 mm, tandis que le pas (p) ou la largeur des lamelles est compris entre 5 et 10 mm pour la première lamelle à proximité du cylindre d'enroulement et entre 10 et 70 mm pour les autres, et l'angle (α) du biseau entre deux lamelles étant compris entre 10 et 45°.

5. Dispositif d'ouvrant selon l'une des revendications 1 à 4, **caractérisé en ce que**, pour un diamètre du cylindre d'enroulement (1; 1') compris entre 25 et 80 mm, l'épaisseur des premières lamelles (2'a-2'd) à proximité du cylindre d'enroulement (1') est comprise entre 5 et 15 mm.

6. Dispositif d'ouvrant selon l'une des revendications 1 à 5, **caractérisé en ce que** le cylindre d'enroulement (1; 1') est motorisé.

7. Dispositif d'ouvrant selon l'une des revendications 1 à 5, **caractérisé en ce que** le cylindre d'enroulement (1; 1') est actionné à manivelle.

8. Dispositif d'ouvrant selon l'une des revendications 1 à 7, **caractérisé en ce que** l'ensemble des lamelles (2; 2') et du cylindre d'enroulement (1; 1') intégré est réalisé en résine avec ajout de fibres orientées.

9. Procédé de réalisation du dispositif d'ouvrant coulissant à lamelles selon l'une des revendications 1 à 8, **caractérisé en ce qu'**il consiste à mouler la série des lamelles avec le cylindre d'enroulement à l'aide d'un demi-moule supérieur (6) et d'un demi-moule inférieur (7), de sorte qu'il est possible de donner, pour un diamètre déterminé du cylindre d'enroulement, des valeurs différentes aux différents paramètres caractéristiques des lamelles tels que: l'épaisseur (e) de la lamelle, le pas (p) ou largeur de la lamelle, l'angle (α) du biseau entre deux lamelles ainsi que l'inter-distance (i) entre deux doubles charnières film (3) dans un même sillon, et cela sans augmenter les coûts de fabrication;

10. Procédé selon la revendication 9, **caractérisé en ce que** le moule inférieur (7) présente des saillies (8) pour la formation des doubles charnières film (3) et d'un pas correspondant au pas variable des lamelles (2; 2') à réaliser.

11. Application du dispositif selon l'une des revendications 1 à 8 aux ouvrants de véhicules automobiles.
